# EUROPEAN PATENT APPLICATION

(11) **EP 4 641 403 A1**
(43) Date of publication of application: **29.10.2025**
(21) Application number: 25165695.5
(22) Date of filing: 24.03.2025
(51) Int. Cl.: G06F 16/3329, G06F 16/3332, G06F 16/334, G06F 40/30, G06N 20/00, G06Q 50/20, G09B 5/00

(54) **LEARNING SYSTEM AND EXECUTION METHOD THEREOF**

(30) Priority: 26.04.2024 TW 113115631
(71) Applicant: Optoma Coporation, New Taipei City 231633 (TW)
(72) Inventor: LEE, Wen, 231633 NEW TAIPEI CITY (TW)
(74) Representative: Ter Meer Steinmeister & Partner

(57) **Abstract**

A learning system and an execution method thereof are provided. The execution method includes: displaying an option object through a graphical user interface of a display device, wherein the option object includes at least one option, and the at least one option is associated with course information; in response to one of the at least one option being selected, the graphical user interface displaying a user image and a virtual object; in response to the virtual object being triggered, the graphical user interface displaying a function window, and the function window at least partially overlapping with the user image, wherein the function window has at least one learning option; in response to one of the at least one learning option being triggered, the graphical user interface displaying a question-and-answer window; the question-and-answer window of the graphical user interface displaying a templated answer corresponding to the input data.

## Description

This application claims Taiwan application serial no. 113115631, filed on April 26, 2024.

### BACKGROUND

### Technical Field

The disclosure relates to an electronic digital data processing technology, and particularly relates to a learning system and an execution method of the learning system.

### Description of Related Art

Along with advancement of science and technology, remote teaching systems are gradually becoming popular. A remote teaching system may not only save users time and cost in transportation, but also bring users a variety of learning experiences. For example, teachers may play videos to assist teaching. However, remote teaching systems still have many shortcomings. For example, a teaching system may not be able to provide timely guidance to students, causing the students to interrupt the course to seek guidance from teachers or classmates. For this reason, the teaching system may use artificial intelligence models to answer students' questions. However, the students' questions are often too colloquial for the models to correctly identify the questions, causing the models to answer incorrect information.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure is directed to a learning system and an execution method of the learning system, which are adapted to automatically provide clear and readable answers to questions posed by users.

Additional aspects and advantages of the disclosure will be set forth in the description of the techniques disclosed in the disclosure.

The object is solved by the features of the independent claims. Preferred embodiments are given in the dependent claims.

In order to achieve one or a portion of or all of the objects or other objects, an embodiment of the disclosure provides a learning system including a host. The host includes a first storage medium, a first processing device and a display device. The first storage medium is configured to store at least one program, wherein the at least one program includes a learning program. The first processing device is electrically connected to the first storage medium, wherein the first processing device is configured to execute the learning program. The display device is electrically connected to the first processing device. The display device is configured to display a graphical user interface according to the executed learning program, wherein the graphical user interface is configured to display an option object. The option object includes at least one option, and the at least one option is associated with course information. In response to one of the at least one option being selected, the graphical user interface is configured to display a user image, and the user image includes at least one learning option. In response to one of the at least one learning option being triggered, the graphical user interface is configured to display a question-and-answer window, wherein the question-and-answer window is configured to receive and display input data. In response to receiving the input data, the question-and-answer window of the graphical user interface is configured to display a templated answer corresponding to the input data and associated with the course information.

In one or more embodiments, the first storage medium may be adapted to store at least one of a machine learning model, a plurality of question templates corresponding to the machine learning model and a plurality of answer templates corresponding to the machine learning model.

In one or more embodiments, the first processing device may be configured to execute: in response to receiving a user instruction associated with the input data, obtaining question information and the course information according to the user instruction, wherein the course information matches the machine learning model; selecting a selected question template from the plurality of question templates according to the course information, and generating a templated question according to the selected question template and the question information; inputting the templated question into the machine learning model to generate answer information; selecting a selected answer template from the plurality of answer templates according to the course information, and generating the templated answer according to the selected answer template and the answer information.

In one or more embodiments, the learning system may further include a cloud server for communication connection with the host.

In one or more embodiments, the cloud server may include a second storage medium and a second processing device.

In one or more embodiments, the second processing device may be electrically connected to the second storage medium.

In one or more embodiments, the second storage medium may be adapted to store at least one of a machine learning model, a plurality of question templates corresponding to the machine learning model and a plurality of answer templates corresponding to the machine learning model.

In one or more embodiments, the second processing device may be configured to execute: in response to receiving a user instruction associated with the input data, obtaining question information and course information according to the user instruction, wherein the course information matches the machine learning model; selecting a selected question template from the plurality of question templates according to the course information, generating a templated question according to the selected question template and the question information; inputting the templated question into the machine learning model to generate answer information; and selecting a selected answer template from the plurality of answer templates according to the course information, and generating the templated answer according to the selected answer template and the answer information.

In one or more embodiments, the second storage medium may store a plurality of machine learning models, wherein the second processing device may be further configured to execute: selecting the machine learning model from the plurality of machine learning models according to the course information.

In one or more embodiments, the second processing device may be further configured to execute: performing a natural language processing on the question information to obtain at least one keyword corresponding to the question information; and filling the selected question template with the at least one keyword corresponding to the question information to generate the templated question.

In one or more embodiments, the second processing device may be further configured to execute: performing a natural language processing on the answer information to obtain at least one keyword corresponding to the answer information; and filling the selected answer template with the at least one keyword corresponding to the answer information to generate the templated answer.

In one or more embodiments, the machine learning model may include a large language model.

In one or more embodiments, the second processing device may be further configured to execute: inputting the templated question and a restrictive condition to the machine learning model to generate the answer information.

In one or more embodiments, the restrictive condition may include a text length.

In one or more embodiments, the first processing device may be further configured to execute: in response to displaying the templated answer, receiving a user feedback corresponding to the templated answer.

In one or more embodiments, the second processing device may be further configured to execute: updating the machine learning model according to the user feedback.

In one or more embodiments, the second processing device may be further configured to execute: updating the machine learning model according to reinforcement learning from human feedback.

In one or more embodiments, the user instruction may include a first user instruction and a second user instruction.

In one or more embodiments, the second processing device may be further configured to execute: in response to receiving the first user instruction corresponding to the option, obtaining the course information; and in response to receiving the second user instruction corresponding to the input data, obtaining the question information according to the second user instruction.

In one or more embodiments, the graphical user interface may be configured to display a function window.

In one or more embodiments, the function window may include two learning options.

In one or more embodiments, the display device may be further configured to execute: in response to the other one of the two learning options in the function window being triggered, the graphical user interface displaying a review window, and the review window including a test paper corresponding to the course information.

In one or more embodiments, the second storage medium may further store a classification model.

In one or more embodiments, the second processing device may be further configured to execute: determining a question classification corresponding to a user learning record according to the classification model, wherein the user learning record includes at least one of the question information, the course information, the templated question, the answer information and the templated answer; adjusting a weight of the question classification according to the user learning record; and generating a test paper according to the weight, wherein the test paper includes at least one question corresponding to the question classification, and a number of the at least one question is associated with the weight.

In one or more embodiments, the course information may include at least one of the following: a subject, a grade and a semester.

In one or more embodiments, the graphical user interface may be further configured to display a virtual object, and in response to the virtual object being triggered, the graphical user interface is configured to display a function window, and the function window at least partially overlaps the user image, wherein the function window has at least one learning option.

In order to achieve one or a portion of or all of the objects or other objects, an embodiment of the disclosure provides an execution method of a learning system including: displaying an option object through a graphical user interface of a display device, wherein the option object includes at least one option, and the at least one option is associated with course information; in response to one of the at least one option being selected, the graphical user interface being configured to display a user image, wherein the user image includes at least one learning option; in response to one of the at least one learning option being triggered, the graphical user interface displaying a question-and-answer window, wherein the question-and-answer window is configured to receive and display input data; and in response to receiving the input data, the question-and-answer window of the graphical user interface being configured to display a templated answer corresponding to the input data and associated with the course information.

In one or more embodiments, the execution method may further include: in response to receiving a user instruction associated with the input data, obtaining question information and course information corresponding to the question information according to the user instruction by a processing device, wherein the course information matches a machine learning model, wherein a plurality of question templates and a plurality of answer templates correspond to the machine learning model; selecting a selected question template from the plurality of question templates by the processing device according to the course information, and generating a templated question according to the selected question template and the question information; inputting the templated question into the machine learning model to generate answer information; selecting a selected answer template from the plurality of answer templates according to the course information, and generating the templated answer according to the selected answer template and the answer information.

In one or more embodiments, the execution method may further include: in response to one of the at least one option being selected, the graphical user interface being configured to display a virtual object; in response to the virtual object being triggered, the graphical user interface being configured to display a function window, and the function window at least partially overlapping the user image, wherein the function window has at least one learning option.

Based on the above descriptions, the learning system of the disclosure may interact with users through the graphical user interface to implement questioning and answering interactions. The learning system may obtain the course information related to current teaching and obtain question information when users ask questions. The learning system may convert more colloquial question information into templated questions so that the machine learning model may correctly identify the questions asked by users and provide appropriate answers.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a learning system of an embodiment of the disclosure.
FIG. 2 a schematic diagram illustrating a learning system of another embodiment of the disclosure.
FIG. 3 is a flowchart illustrating an execution method of a learning system according to an embodiment of the disclosure.
FIG. 4 is a schematic diagram illustrating an option object provided by a graphical user interface according to an embodiment of the disclosure.
FIG. 5 is a schematic diagram illustrating a virtual object and a function window in a user image of the graphical user interface according to an embodiment of the disclosure.
FIG. 6 is a schematic diagram of a question-and-answer window and a review window according to an embodiment of the disclosure.
FIG. 7 is a flowchart illustrating an execution method of a learning system according to an embodiment of the disclosure.

### DESCRIPTION OF THE EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

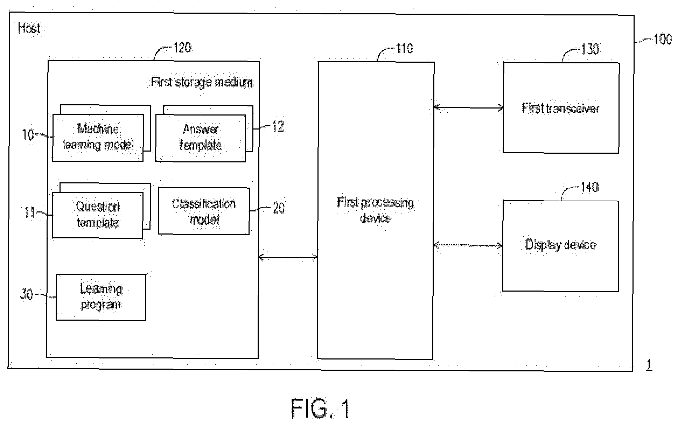

FIG. 1 is a schematic diagram of a learning system 1 according to an embodiment of the disclosure. The learning system 1 may include a host 100. The host 100 may include a first processing device 110, a first storage medium 120, a first transceiver 130 and a display device 140. The host 100 may be a PC, a server, a laptop or a smart phone, etc..

The first processing device 110 includes, for example, at least one processor, wherein the processor is, for example, a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA) or other similar devices or a combination of the above devices. The first processing device 110 may be electrically connected to the first storage medium 120, the first transceiver 130 and the display device 140 respectively, and the first processing device 110 accesses and executes algorithms, modules or various programs stored in the first storage medium 120. An electrical connection is defined as a connection that may transmit electrical signals. A module is defined as containing at least one program or at least one algorithm.

The first storage medium 120 is, for example, any type of fixed or removable random access memory (RAM), read-only memory (ROM), flash memory, floppy disk, optical disk, tape, memory card, hard disk drive (HDD), solid state drive (SSD) or similar devices or a combination of the above devices. The first storage medium 120 is configured to at least store algorithms, modules or programs that may be executed by the first processing device 110. In the embodiment, the first storage medium 120 may at least store one or more machine learning models 10, one or more question templates 11 respectively corresponding to the one or more machine learning models 10, one or more answer templates 12 respectively corresponding to the one or more machine learning models 10, a classification model 20 and a learning program 30, and functions thereof will be described later. Specifically, the machine learning model 10 may include at least one program and at least one algorithm. The question template 11 may include at least one program. The answer template 12 may include at least one program. The classification model 20 may include at least one program and at least one algorithm. The learning program 30 may include at least one program and at least one algorithm.

The first transceiver 130 transmits or receives signals in a wireless or wired manner. The first transceiver 130 is, for example, a wireless network circuit or chip, a wired network circuit or chip, or a combination of the above circuits or chips. In an embodiment, the first transceiver 130 is, for example, a circuit or chip that supports global system for mobile communication (GSM), a circuit or chip that supports wireless fidelity (WiFi), or a circuit or chip that supports Bluetooth communication technology, or a combination thereof, which is not limited by the disclosure. In addition, the first transceiver 130 may also perform functional operations such as low noise amplification, impedance matching, frequency mixing, up or down frequency conversion, filtering, amplification, and similar functional operations. The first transceiver 130 may be used to connect to the Internet.

The display device 140 may include a liquid-crystal display (LCD), a light-emitting diode (LED) display, a vacuum fluorescent display (VFD), a plasma display panel (PDP), an organic light-emitting diode (OLED) or a field-emission display (FED). The first processing device 110 may execute the learning program 30 stored in the first storage medium 120 to provide the user with a graphical user interface (GUI) through the display device 140.

The first processing device 110 may execute the learning program 30. The executed learning program 30 may display a graphical user interface (GUI) through the display device 140 to interact with the user. The learning program 30 may access data stored in the first storage medium 120 to drive modules such as the machine learning models 10, the question templates 11, the answer templates 12 or the classification model 20 to execute tasks assigned by the user (for example: answer questions or generate test papers).

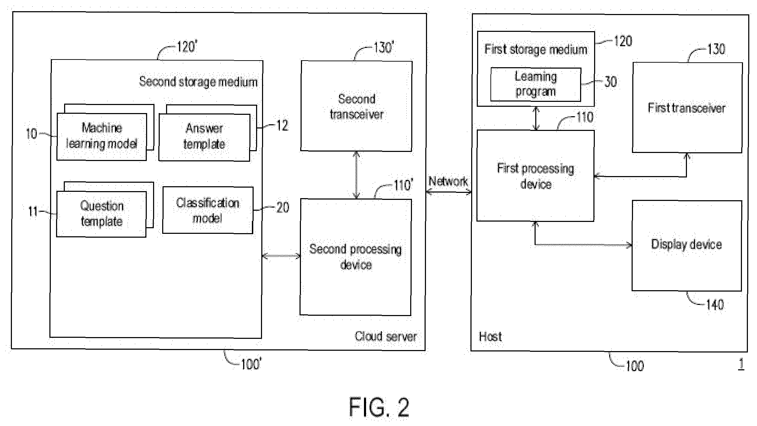

FIG. 2 is a schematic diagram illustrating a learning system 1 according to another embodiment of the disclosure. Compared with the embodiment of FIG. 1, the learning system 1 in the embodiment may further include a cloud server 100'. Through a network, the cloud server 100' may communicate with the host 100. The cloud server 100' may include a second processing device 110', a second storage medium 120' and a second transceiver 130'. The second processing device 110' may be electrically connected to the second storage medium 120' and the second transceiver 130' respectively, and the second processing device 110' may access and execute a plurality of modules and various programs stored in the second storage medium 120'. A module is defined as containing at least one program or at least one algorithm.

Hardware devices of the second processing device 110', the second storage medium 120' and the second transceiver 130' are respectively the same as that of the first processing device 110, the first storage medium 120 and the first transceiver 130 of the host 100, and details thereof are not repeated.

It should be noted that a difference between the embodiment of FIG. 2 and the embodiment of FIG. 1 is that: in the embodiment of FIG. 2, the second storage medium 120' of the cloud server 100' may at least store the one or more machine learning models 10, the one or more question templates 11 respectively corresponding to the one or more machine learning models 10, the one or more answer templates 12 respectively corresponding to the one or more machine learning models 10, and the classification model 20. When the first processing device 110 of the host 100 executes the learning program 30 to interact with the user, the learning program 30 may establish a communication connection between the host 100 and the cloud server 100' through the first transceiver 130. The learning program 30 may send a demand signal to the second transceiver 130' of the cloud server 100' via the network. The learning program 30 may access the data stored in the second storage medium 120' through the demand signal, so as to drive the machine learning models 10, the question templates 11, the answer templates 12 or the classification model 20, etc., in the second storage medium 120' to execute tasks assigned by the user (for example, answer questions or generate test papers).

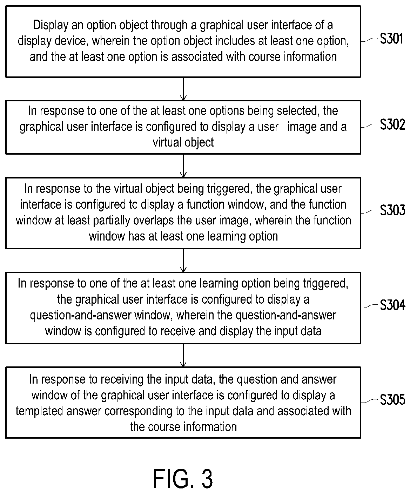

FIG. 3 is a flowchart illustrating an execution method of a learning system according to an embodiment of the disclosure, wherein the execution method may be implemented by the learning system 1 of FIG. 1 or FIG. 2.

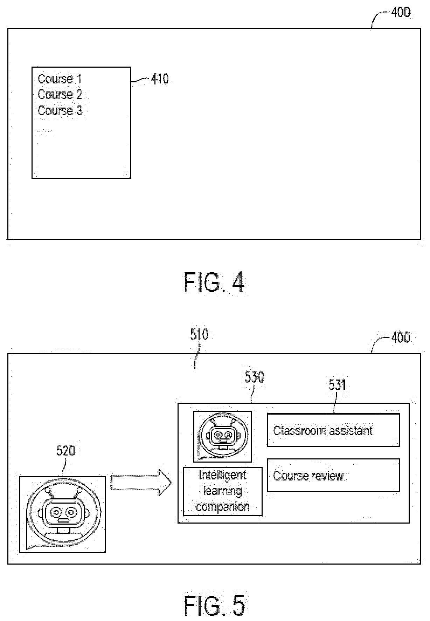

In step S301, an option object is displayed through a graphical user interface of a display device in the learning system 1, wherein the option object includes at least one option, and the at least one option is associated with course information. Specifically, the first processing device 110 of the learning system 1 interacts with the user by executing the learning program 30 and displaying the graphical user interface through the display device 140. Referring to FIG. 4 at the same time, FIG. 4 is a schematic diagram illustrating an option object 410 provided by a graphical user interface 400 according to an embodiment of the disclosure. The option object 410 may include one or a plurality of options, and each option is associated with corresponding course information. The course information may include, but is not limited to, subjects, grades, or semesters.

In step S302, in response to one of the at least one option being selected, the learning system 1 uses the graphical user interface to display a user image and a virtual object. The host 100 of the learning system 1 may receive a signal containing a user instruction through the first transceiver 130 and perform a corresponding operation through the learning program 30 according to the signal. For example, if the user selects one of the options in the option object 410, such as "Course 1", the first processing device 110 then receives a signal containing the user instruction of selecting "Course 1" according to the first transceiver 130, and obtain the course information of "Course 1" through the learning program 30. "Course 1" is, for example, a first unit of a mathematics subject in a second semester of a third grade. After one of the options is selected by the user, the first processing device 110 uses the learning program 30 to execute a course corresponding to the option (such as "Course 1") selected by the user to perform teaching or interaction, such as instructing the user to enter learning content corresponding to "Course 1". To be specific, after one of the options (for example, "Course 1") in the option object 410 is selected, the learning program 30 may display a user image and one or a plurality of virtual objects through the graphical user interface 400. The user may study the selected course (such as the first unit of the mathematics subject in the second semester of the third grade) through the user image displayed by the graphical user interface 400. In addition, when the user needs to perform course interaction, the user may further trigger the virtual objects displayed on the graphical user interface 400.

In step S303, in response to the virtual object being triggered, the learning system 1 uses the graphical user interface to display a function window, and the function window at least partially overlaps the user image, wherein the function window has at least one learning option. Referring to FIG. 5 at the same time, FIG. 5 is a schematic diagram illustrating a virtual object 520 and a function window 530 in a user image 510 of the graphical user interface 400 according to an embodiment of the disclosure. The virtual object 520 is, for example, a functional icon. For example, the host 100 of the learning system 1 may receive a signal containing the user instruction generated after the user clicks on the virtual object 520 through the first transceiver 130, and trigger the virtual object 520 according to the signal to execute a function (such as an intelligent learning companion) corresponding to the virtual object 520. In the embodiment, after the virtual object 520 is triggered by the signal containing the user instruction, the graphical user interface 400 may display a function window 530, wherein the function window 530 may at least partially overlap the user image 510 by covering. The function window 530 may contain one or a plurality of learning options 531. For example, the function window 530 may include multiple learning options 531 such as "Classroom assistant" or "Classroom assistant" and "Course review". In the embodiment, the learning option 531 of "Classroom assistant" may provide the user with question-and-answer interactions, and the learning option 531 of "Course review" may provide the user with a test paper for testing to check the effectiveness of learning. The user may execute the corresponding function by selecting the learning option 531 in the function window 530.

In an embodiment, step S303 may be omitted. Specifically, the user image 510 displayed by the graphical user interface 400 may directly contain at least one learning option 531 for the user to select, and the learning option 531 does not need to be displayed in the function window 530 by triggering the virtual object 520.

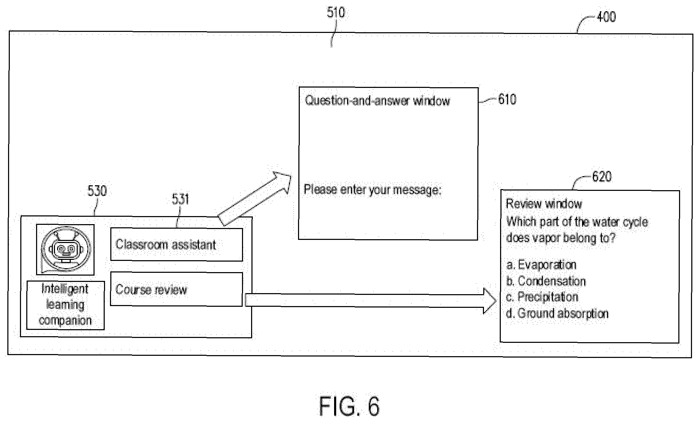

In step S304, in response to one of the at least one learning option being triggered, the learning system 1 uses the graphical user interface to display a question-and-answer window, wherein the question-and-answer window is configured to receive and display the input data. Referring to FIG. 6 as well, FIG. 6 is a schematic diagram of a question-and-answer window 610 and a review window 620 according to an embodiment of the disclosure. The question-and-answer window 610 may be a floating window. The review window 620 may be a floating window. The floating window may be moved to a desired position in the user image 510 by mouse. The host 100 of the learning system 1 may receive a signal containing a user instruction generated after the user clicks one of the learning options 531 through the first transceiver 130, and trigger the learning option 531 selected by the user according to the signal to display a corresponding window through the graphical user interface 400. For example, when the user clicks "Classroom assistant" in the learning option 531, in response to the learning option 531 of "Classroom assistant" being triggered, the learning system 1 uses the graphical user interface 400 to display the question-and-answer window 610; when the user clicks the "Course review" in the learning option 531, in response to the learning option 531 of "Course review" being triggered, the learning system 1 uses the graphical user interface 400 to display the review window 620. The question-and-answer window 610 may be configured to receive and display input data input by the user, wherein the input data includes, for example, questions that the user wants to ask. The review window 620 includes a test paper corresponding to the course information (for example, the first unit of the mathematics subject in the second semester of the third grade), wherein the test paper may include one or a plurality of exercises.

In step S305, in response to receiving the input data, the learning system 1 uses the question-and-answer window of the graphical user interface to display a templated answer corresponding to the input data and associated with the course information. Specifically, the user inputs a question to be asked in the question-and-answer window 610 to generate input data, and after receiving the user instruction related to the input data through the learning program 30, the first processing device 110 may obtain the question information according to the user instruction. In an embodiment, the question information may include a restrictive condition (such as a text length, a domain breadth, or a complexity) used to limit the answer answered by the learning program 30. For example, the user may enter "within 300 words" as the restrictive condition to limit the answer answered by the learning program 30 to be no more than 300 words.

The following description will take FIG. 2 as an example to describe the process of the learning system 1 generating the templated answer according to the input data. However, the method of generating the templated answer may also be used in the learning system 1 of FIG. 1, and the only difference is that the tasks performed by the second processing device 110' of FIG. 2 are all performed by the first processing device 110 of FIG. 1, so that detail thereof is not repeated.

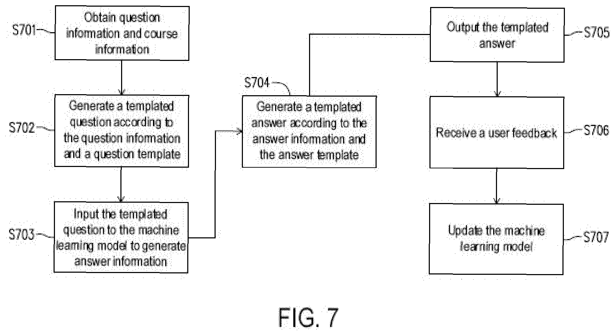

Referring to FIG. 7 at the same time, FIG. 7 is a flowchart illustrating an execution method of a learning system according to an embodiment of the disclosure. In step S701, the second processing device 110' obtains question information and course information. Specifically, after the user inputs a question in the question-and-answer window 610, in response to receiving the user instruction associated with the input data, the learning system 1 uses the second processing device 110' to obtain the question information and the course information through the host 100 according to the user instruction, wherein the course information matches with the machine learning model 10 in the second storage medium 120'. Specifically, the user instruction includes a first user instruction and a second user instruction, wherein the first user instruction corresponds to the option in the option object 410, and the second user instruction corresponds to the input data of the user. The first processing device 110 obtains the course information, wherein the current learning program 30 is located based on the first user instruction, for example: the first unit of the mathematics subject in the second semester of the third grade. The first processing device 110 obtains the question information according to the second user instruction. The first processing device 110 then transmits the course information and question information to the second processing device 110' of the cloud server 100' for processing.

In step S702, the second processing device 110' may generate a templated question according to the question information and a question template 11. Since the question information input by the user is usually more colloquial, it easily makes it difficult for the machine learning model to recognize a true intention of the user. In order to solve the above problem, the second processing device 110' may convert the question information input by the user into the templated question. Specifically, the second processing device 110' may select a selected machine learning model 10 that matches the course information from the plurality of machine learning models 10 in the second storage medium 120' according to the course information. For example, different subjects or different grades have corresponding machine learning models 10, and the second processing device 110' finds the corresponding machine learning model 10 according to the course information. The selected machine learning model 10 may have one or a plurality of corresponding question templates 11 or one or a plurality of corresponding answer templates 12. The second processing device 110 may select the selected question template 11 from the plurality of question templates 11. The second processing device 110' may generate the templated question according to the selected question template 11 and the question information.

In an embodiment, the second processing device 110' may select the selected question template 11 according to a keyword of the course information or the question information. Specifically, the question template 11 may be a question text designed manually or constructed through an artificial intelligence model, which contains one or more blank fields [ ], and when the blank fields [ ] are filled with appropriate terms, it allows the question text to form a complete question (i.e., the templated question). The second processing device 110' may execute a natural language processing (NLP) program on the question information to obtain one or a plurality of keywords corresponding to the question information. The second processing device 110' may fill in relevant information of the keyword into the selected question template 11 (for example, the space field [] in the question text) to generate a templated question.

For example, it is assumed that the question information contains a text "how to calculate a length of a hypotenuse of a right triangle?" and the course information corresponds to the mathematics subject and an eighth grade. The second processing device 110' may select the machine learning model 10 corresponding to the mathematics subject and the eighth grade from the plurality of machine learning models 10 as the selected machine learning model 10. The second processing device 110' may perform the natural language processing on the text "How to calculate a length of a hypotenuse of a right triangle?" to obtain keywords (for example: "right triangle" and "a length of a hypotenuse"). The second processing device 110' may select a question text from the plurality of question templates 11, for example: "In [a subcategory of mathematics subject], when [known conditions], then what is a [geometric property] of this [geometric shape]?". Wherein the text in each blank field [] represents corresponding content that may be filled in. The second processing device 110' may correspondingly fill in the relevant information of the keywords into the blank fields [] in the question text to generate a templated question, for example: "In [Geometry], if [it is known that a triangle is a right triangle and lengths of the other two sides are known], then what is a [length of a hypotenuse] of this [right triangle]?".

In step S703, the second processing device 110' may input the templated question to the selected machine learning model 10 to generate answer information. In an embodiment, the second processing device 110' may obtain the restrictive conditions according to the user instruction, and input the templated question and the restrictive conditions to the selected machine learning model 10 to generate the answer information. In another embodiment, the selected machine learning model 10 may itself have restrictive conditions to limit the answer to the question. The restrictive conditions may include, but are not limited to, text length, breadth, or complexity.

The machine learning model 10 is, for example, a large language model (LLM). The second processing device 110' may receive a plurality of batches of training data and train the machine learning model 10 based on the plurality of batches of training data. Training data may include historical question information and historical answer information. The second processing device 110' may take a difference between the answer information generated by the machine learning model 10 and the historical answer information in the training data as a loss function, and train the machine learning model 10 by minimizing a value of the loss function. In an embodiment, the training data may further include a restrictive condition such as a text length. The loss function used to train the machine learning model 10 may be related to a difference between a length of the answer information generated by the machine learning model 10 and a length of the text in the training data.

In an embodiment, the second processing device 110' may update the machine learning model 10 according to a reinforcement learning from human feedback algorithm.

In step S704, the second processing device 110' may generate a templated answer according to the answer information and the answer template 12. Specifically, the second processing device 110' may select a selected answer template 12 from the plurality of answer templates 12.

In an embodiment, the second processing device 110' may select the selected answer template 12 according to the course information, keywords of the question information, or keywords of the answer information. Specifically, the answer template 12 may be an answer text designed manually or constructed through an artificial intelligence model, which contains one or more blank fields [ ], and when the blank fields [ ] are filled with appropriate terms, it allows the answer text to form a complete answer (i.e., the templated answer). The second processing device 110' may execute the natural language processing on the answer information to obtain one or a plurality of keywords corresponding to the answer information. The second processing device 110' may fill relevant information of the keywords into the selected answer template 12 (for example, the blank fields [] in the answer text) to generate the templated answer.

For example, it is assumed that the answer information contains the text "In geometry, if it is known that a triangle is a right triangle and the lengths of the other two sides are known, then the length of the hypotenuse of the right triangle may be calculated by using Pythagorean theorem, and the length of the hypotenuse is a square root of a sum of squares of lengths of the other two right-angled sides". The second processing device 110' may perform the natural language processing on the above-mentioned text to obtain keywords (for example: "Pythagorean theorem", "sum of squares" or "square root"). The second processing device 110' may select an answer text from a plurality of answer templates 12, for example: "In geometry, for a [geometric shape], when [known conditions], [geometric property] may be determined by [mathematical principles or theorem], specifically, [calculation method]". Wherein the text in each blank field [] represents corresponding content that may be filled in. The second processing device 110' may correspondingly fill in relevant information of the keywords into the blank field [] in the above-mentioned answer text to generate a templated answer, for example: "In geometry, for a [right triangle], when [lengths of other two right-angled sides are known], [a length of a hypotenuse] may be obtained by [Pythagorean theorem], specifically, [the length of the hypotenuse is a square root of a sum of squares of the lengths of the other two right-angled sides]".

In step S705, the second processing device 110' may output the templated answer. For example, the second processing device 110' outputs the templated answer to the host 100, and the first processing device 110 displays the templated answer through the question-and-answer window 610 through the learning program 30 for the user's reference.

In step S706, the first processing device 110 may receive a user feedback through the learning program 30. In step S707, the second processing device 110' may update the machine learning model 10 according to the user feedback. For example, after the question-and-answer window 610 displays an answer (for example, the templated answer) in response to the user's question, the first processing device 110 may receive the user feedback through, for example, the first transceiver 130 or the display device 140 with a touch function, wherein the user feedback may indicate a degree of satisfaction of the user with the templated answer displayed in the question-and-answer window 610. The second processing device 110' may update the machine learning model 10 according to the user feedback based on a reinforcement learning algorithm, so that the answer output by the machine learning model 10 may be closer to future user needs.

Referring to FIG. 2, FIG. 5 and FIG. 6, in an embodiment, the test paper in the review window 620 may be generated through the second processing device 110'. Specifically, the second processing device 110' may determine a number of various types of exercises in the test paper according to weights of the various types of exercises. The second processing device 110' may give a higher weight to exercises that are less familiar to the user, so that a proportion of such type of exercises in the test paper is increased. For example, the second processing device 110' may receive a user learning record, wherein the user learning record may include information generated by the user's past operations of the learning program 30, wherein the information may include question information, course information, templated questions, answer information or templated answers. The second processing device 110' may determine a question classification corresponding to the user learning record according to the classification model 20, and adjust a weight of the question classification according to the user learning record. The second processing device 110' may generate the test paper according to the weight of the question classification, wherein the test paper may include one or a plurality of questions corresponding to the question classification, and a number of the one or plurality of questions corresponding to the question classification may be associated with the weight.

For example, if the user learning record contains a large amount of question information related to geometry, it means that the user is less familiar with geometry. Accordingly, the learning program 30 may increase a weight of geometry exercises, so that the test paper displayed in the review window 620 may contain more geometry exercises.

In summary, the technical problem to be solved by the disclosure is that the user's colloquialization problem causes the machine learning models to spend too much time in analyzing irrelevant terms in the question, causing the machine learning models to provide answers with grammatical errors or unclear meanings, making it difficult for users to read easily, and thus making it difficult for users to understand what the answers are meant to express. In conclusion, the learning system according to the embodiments of the disclosure has at least one of the following advantage: the learning system may interact with the user by asking questions and answering questions through the graphical user interface. The learning system may obtain course information related to current learning and obtain question information when users ask questions. The learning system may convert more colloquial question information into templated questions so that the machine learning models may correctly identify the questions asked by the users and provide appropriate answers. Users may add restrictive conditions such as a text length when inputting data so that the answers generated by the machine learning models comply with the restrictive conditions. The learning system may also update the machine learning models based on user feedback to improve the performance of the machine learning models. The learning system may determine user's familiarity with different classified questions based on the user's learning records, and accordingly generate test papers suitable for the user.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A learning system, comprising a host (100), comprising:
a first storage medium (120), configured to store at least one program, wherein the at least one program comprises a learning program (30);
a first processing device (110), electrically connected to the first storage medium (120), wherein the first processing device (110) is configured to execute the learning program (30); and
a display device (140), electrically connected to the first processing device (110), and configured to display a graphical user interface (400) according to the executed learning program (30), wherein the graphical user interface (400) is configured to display an option object (410), the option object (410) comprises at least one option, and the at least one option is associated with course information, wherein
in response to one of the at least one option being selected, the graphical user interface (400) is configured to display a user image (510), wherein the user image (510) comprises at least one learning option (531),
in response to one of the at least one learning option (531) being triggered, the graphical user interface (400) is configured to display a question-and-answer window (610), wherein the question-and-answer window (610) is configured to receive and display input data, and
in response to receiving the input data, the question-and-answer window (610) of the graphical user interface (400) is configured to display a templated answer corresponding to the input data and associated with the course information.

2. The learning system as claimed in claim 1, wherein the first storage medium (120) is adapted to store a machine learning model (10), a plurality of question templates (11) corresponding to the machine learning model (10) and a plurality of answer templates (12) corresponding to the machine learning model (10), and the first processing device (110) is configured to execute:
in response to receiving a user instruction associated with the input data, obtaining question information and the course information according to the user instruction, wherein the course information matches the machine learning model (10);
selecting a selected question template from the plurality of question templates according to the course information, and generating a templated question according to the selected question template and the question information;
inputting the templated question into the machine learning model (10) to generate answer information; and
selecting a selected answer template from the plurality of answer templates according to the course information, and generating the templated answer according to the selected answer template and the answer information.

3. The learning system as claimed in claim 1, further comprising a cloud server (100') configured to be communicatively connected to the host (100), the cloud server (100') comprises a second storage medium (120') and a second processing device (110'), the second processing device (100') is electrically connected to the second storage medium (110'), the second storage medium (120') is adapted to store a machine learning model (10), a plurality of question templates (11) corresponding to the machine learning model (10) and a plurality of answer templates (12) corresponding to the machine learning model (10), and the second processing device (110') is configured to execute:
in response to receiving a user instruction associated with the input data, obtaining question information and the course information according to the user instruction, wherein the course information matches the machine learning model (10);
selecting a selected question template from the plurality of question templates (11) according to the course information, and generating a templated question according to the selected question template and the question information;
inputting the templated question into the machine learning model (10) to generate answer information; and
selecting a selected answer template from the plurality of answer templates (12) according to the course information, and generating the templated answer according to the selected answer template and the answer information.

4. The learning system as claimed in claim 3, wherein the second storage medium (120') is configured to store a plurality of machine learning models (10), and the second processing device (110') is further configured to execute:
selecting the machine learning model (10) from the plurality of machine learning models (10) according to the course information.

5. The learning system as claimed in claim 3 or 4, wherein the second processing device (110') is further configured to execute:
performing a natural language processing on the question information to obtain at least one keyword corresponding to the question information; and
filling the selected question template with the at least one keyword corresponding to the question information to generate the templated question and/or the second processing device (110') is further configured to execute:
performing a natural language processing on the answer information to obtain at least one keyword corresponding to the answer information; and
filling the selected answer template with the at least one keyword corresponding to the answer information to generate the templated answer.

6. The learning system as claimed in any one of the preceding claims 2 or 3, wherein the machine learning model comprises a large language model.

7. The learning system as claimed in claim 3, wherein the second processing device (110') is further configured to execute:
inputting the templated question and a restrictive condition to the machine learning model (10) to generate the answer information, preferably the restrictive condition comprises a text length.

8. The learning system as claimed in claim 3, wherein the first processing device (110) is further configured to execute:
in response to displaying the templated answer, receiving a user feedback corresponding to the templated answer; and
the second processing device (110') is further configured to execute: updating the machine learning model (10) according to the user feedback.

9. The learning system as claimed in claim 8, wherein the second processing device (110') is further configured to execute:
updating the machine learning model (10) according to reinforcement learning from human feedback.

10. The learning system as claimed in claim 3, wherein the user instruction comprises a first user instruction and a second user instruction, and the second processing device (110') is further configured to execute:
in response to receiving the first user instruction corresponding to the option, obtaining the course information; and
in response to receiving the second user instruction corresponding to the input data, obtaining the question information according to the second user instruction.

11. The learning system as claimed in claim 1, wherein the graphical user interface (400) is configured to display a function window (530), and wherein the function window (530) comprises two learning options (531), and the display device (140) is further configured to execute: in response to the other one of the two learning options (531) in the function window (530) being triggered, the graphical user interface (400) displaying a review window (620), and the review window (620) comprising a test paper corresponding to the course information.

12. The learning system as claimed in claim 3, wherein the second storage medium (120') further stores a classification model (20), and the second processing device (120') is further configured to execute:
determining a question classification corresponding to a user learning record according to the classification model (20), wherein the user learning record comprises at least one of the question information, the course information, the templated question, the answer information, and the templated answer;
adjusting a weight of the question classification according to the user learning record; and
generating a test paper according to the weight, wherein the test paper comprises at least one question corresponding to the question classification, and a number of the at least one question is associated with the weight.

13. The learning system as claimed in claim 1, wherein the course information comprises at least one of the following: a subject, a grade, and a semester.

14. The learning system as claimed in claim 1, wherein the graphical user interface (400) is further configured to display a virtual object (520), in response to the virtual object (520) being triggered, the graphical user interface (400) is configured to display a function window (530), the function window (530) at least partially overlaps the user image (510), and the function window (530) has the at least one learning option (531).

15. An execution method of a learning system, comprising:
displaying (S301) an option object (410) through a graphical user interface (400) of a display device (140), wherein the option object (410) comprises at least one option, and the at least one option is associated with course information;
in response to one of the at least one option being selected, the graphical user interface (400) being configured to display (S302) a user image (510), wherein the user image (510) comprises at least one learning option (531);
in response to one of the at least one learning option (531) being triggered, the graphical user interface (400) displaying (S304) a question-and-answer window (610), wherein the question-and-answer window (610) is configured to receive and display input data; and
in response to receiving the input data, the question-and-answer window (610) of the graphical user interface (400) being configured to display (S305) a templated answer corresponding to the input data and associated with the course information.
